(19) Europäisches Patentamt
European Patent Office
Office européen des brevets

(11) **EP 2 296 074 A2**

## (12) EUROPEAN PATENT APPLICATION

(43) Date of publication:
**16.03.2011 Bulletin 2011/11**

(51) Int Cl.:
**G05F 1/46** (2006.01)   **B60K 6/00** (2007.10)

(21) Application number: **10172566.1**

(22) Date of filing: **11.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **31.08.2009 JP 2009200462**
**31.05.2010 JP 2010123792**

(71) Applicant: **Hitachi Automotive Systems, Ltd.**
**Hitachinaka-shi**
**Ibaraki**
**312-8503 (JP)**

(72) Inventors:
• **Kanekawa, Nobuyasu**
**Tokyo 100-8220 (JP)**
• **Hirotsu, Teppei**
**Tokyo 100-8220 (JP)**
• **Tanabe, Itaru**
**Ibaraki 312-8503 (JP)**
• **Miyaoka, Shuichi**
**Tokyo 100-8220 (JP)**
• **Oura, Ryoichi**
**Tokyo 100-8220 (JP)**

(74) Representative: **MERH-IP**
**Matias Erny Reichl Hoffmann**
**Paul-Heyse-Strasse 29**
**80336 München (DE)**

(54) **Control system and semiconductor device used therein**

(57)   The present invention aims to provide a control system which is capable of building high-precision current detecting means in a single-chip LSI and can be realized at a lower cost, and a semiconductor device used in the control system. Drive circuits 20-1 to 20-4 are provided inside the same semiconductor chip 1. The drive circuits are equipped with: current detecting shunt resistors Rs1 to Rs4 each of which is provided in each of the drive circuits and detects a current flowing through a load, the current detecting shunt resistors being provided within a semiconductor chip 1 by the same process; a dummy resistor Rd provided within the semiconductor chip 1 by the same process as the current detecting shunt resistors; and a calibration reference Rref externally attached to the semiconductor chip 1 and connected to the dummy resistor Rd. A correcting means 10 corrects the values of currents that flow through the current detecting shunt resistors, using the dummy resistor Rd and the calibration reference Rref.

FIG. 1

EP 2 296 074 A2

**Description**

BACKGROUND OF THE INVENTION

1. Field of the Invention

The present invention relates to a control system for controlling a current allowed to flow through each object to be controlled, and a semiconductor device used therein. The present invention relates particularly to a control system suitable for use in one having a detecting resistor which detects a current flowing through each object to be controlled, and a semiconductor device used therein.

2. Description of the Related Art

In accordance with various objects to be controlled being electronically controlled, electric actuators such as a motor, a solenoid, etc. have been widely used to convert an electric signal to mechanical motion and hydraulic pressure. High-precision current detection is essential to control these electric actuators with a high degree of accuracy. Having a current detecting circuit built in an IC chip here enables a reduction in the size and cost of a control apparatus.
There have been known systems wherein current detecting resistors are built in an IC chip to incorporate a current detecting circuit into the IC chip (refer to, for example, JP-A-2003-203805 and JP-A-2006-165100). With such a configuration, external parts for current detection can be reduced, and a reduction in the size and cost of an apparatus is hence enabled.

SUMMARY OF THE INVENTION

Even though, however, the accuracy of current detection appropriate to the accuracy aimed at current control is required to perform the current control, the systems described in JP-A-2003-203805 and JP-A-2006-165100 are respectively accompanied by a problem that the accuracy of current detection is low. Namely, the value of each of the resistors formed in the IC chip involves an absolute error of a few tens of % due to variations in process. If one attempts to reduce the absolute error, then process management, screening and trimming increase in cost, thus resulting in the cancellation of a cost merit of incorporation into the chip.
An object of the present invention is to provide a control system which is capable of building high-precision current detecting means in a one-chip LSI and can be realized at a lower cost, and a semiconductor device used therein.

(1) In order to achieve the above object, the present invention provides a control system comprising: control means which outputs a control command for controlling a current allowed to flow through each load; and a plurality of drive circuits each of which controls the current allowed to flow through the load, based on the control command outputted from the control means and is provided within the same semiconductor chip. In the control system, the plurality of drive circuits include: current detecting shunt resistors each of which is provided in each of the drive circuits and detects a current flowing through the load, the current detecting shunt resistors being provided within the semiconductor chip by the same process; a dummy resistor provided within the semiconductor chip by the same process as the current detecting shunt resistors; a calibration reference externally attached to the semiconductor chip and connected to the dummy resistor; and correcting means which corrects a value of current flowing through each of the current detecting shunt resistors, using the dummy resistor and the calibration reference.

With such a configuration, high-precision current detecting means can be built in a one-chip LSI and realized at a lower cost.

(2) In the above (1), preferably, the dummy resistor comprises a plurality of resistive elements each having the same shape, which are connected in series in plural form.
(3) In the above (2), preferably, the current detecting shunt resistor comprises resistive elements connected in parallel in plural form.
(4) In the above (1), preferably, the calibration reference is of a calibration reference resistor or a constant current source.
(5) In the above (1), preferably, each of the drive circuits is equipped with an output drive semiconductor element and a current detection semiconductor element. In the above (1), control signal input terminals of the output drive semiconductor element and the current detection semiconductor element are connected to the control means, first current input/output terminals of the output drive semiconductor element and the current detection semiconductor element are connected in parallel, and a second current input/output terminal of the current detection semiconductor element is connected to a first terminal of the current detecting shunt resistor.

(6) In the above (5), preferably, each of the drive circuits is equipped with an operational amplifier circuit. In the above (5), the second current input/output terminal of the current detection semiconductor element is connected to a negative-side input terminal of the operational amplifier circuit, a second current input/output terminal of the output drive semiconductor element is connected to a positive-side input terminal of the operational amplifier circuit, and a second terminal of the current detecting shunt resistor is connected to an output terminal of the operational amplifier circuit.

(7) In the above (6), preferably, the operational amplifier circuit is equipped with a first operational amplifier and a second operational amplifier; a first capacitor is connected to a positive-side input terminal of the second operational amplifier and a second capacitor is connected to a negative-side input terminal thereof; during a first operating phase, the first operational amplifier amplifiers a potential relative to a reference potential, of the negative-side input terminal of the operational amplifier circuit and charges the same into the first capacitor and during a second operating phase, the first operational amplifier amplifies a potential of the positive-side input terminal and charges the same into the second capacitor; and the first operating phase and the second operating phase are repeated alternately.

(8) In the above (7), preferably, the gain of the first operational amplifier is greater than that of the second operational amplifier.

(9) In the above (5), preferably, the output drive semiconductor element is provided on the side of an upper arm and equipped with a second output semiconductor element provided on the side of a lower arm connected in series with the upper arm.

(10) In the above (1), preferably, the correcting means is equipped with a coefficient calculator for determining a coefficient K according to the value of Vd* corresponding to a result of conversion of a voltage Vd applied across the dummy resistor, and a multiplier for multiplying a voltage applied across the current detecting shunt resistor by the coefficient K determined by the coefficient calculator.

(11) In the above (1), preferably, the correcting means is equipped with an A/D converter for converting the voltage applied across the current detecting shunt resistor to a digital signal and inputs the voltage applied across the dummy resistor to a Vref input terminal of the A/D converter as a reference voltage of the A/D converter.

(12) In the above (1), preferably, the control means is built in the semiconductor chip.

(13) In the above (1), preferably, the control means is provided outside the semiconductor chip.

(14) In order to achieve the above object, the present invention provides a semiconductor device used in a control system having control means which outputs a control command for controlling a current allowed to flow through each load, and a plurality of drive circuits each of which controls the current allowed to flow through the load, based on the control command outputted from the control means, the plurality of drive circuits being provided within the same semiconductor chip. The semiconductor device includes: the drive circuits; current detecting shunt resistors each of which is provided in each of the drive circuits and detects a current flowing through the load, the current detecting shunt resistors being provided within the semiconductor chip by the same process; a dummy resistor provided within the semiconductor chip by the same process as the current detecting shunt resistors; connecting terminals which enable a connection of a calibration reference externally attached to the semiconductor chip and connected to the dummy resistor; and correcting means which corrects a value of current flowing through each of the current detecting shunt resistors using the dummy resistor and the calibration reference.

With such a configuration, high-precision current detecting means can be incorporated into a one-chip LSI and realized at a lower cost.

(15) In order to achieve the above object, the present invention provides a semiconductor device comprising: at least two resistors formed on the same semiconductor chip in the same process, wherein the first resistor corresponding to one thereof has means connected to the outside, and wherein the second resistor corresponding to the other thereof is connected to a circuit lying within the same semiconductor chip.

With such a configuration, high-precision current detecting means can be built in a one-chip LSI and realized at a lower cost.

(16) In the above (15), preferably, means for measuring the value of the first resistor and means for correcting the value of the second resistor, based on the result of measurement by the measuring means are provided on the same semiconductor chip.

(17) In a control system using the semiconductor device in the above (15), preferably, means for measuring the value of the first resistor and means for correcting the value of the second resistor, based on the result of measurement by the measuring means are provided on the same semiconductor chip.

(18) In the above (15), preferably, the first resistor is connected to an external calibration reference through means connected to the outside.

(19) In the above (18), preferably, the calibration reference is of a resistor, a constant voltage source or a constant current source.

(20) In the above (15), preferably, the second resistor is of a current detecting shunt resistor, a voltage dividing resistor for dividing an input voltage, or a feedback resistor for determining the gain of an amplifier.

According to the present invention, high-precision current detecting means can be built in a one-chip LSI and realized at a lower cost.

BRIEF DESCRIPTION OF THE DRAWINGS

Fig. 1 is a block diagram showing a configuration of a control system according to a first embodiment of the present invention.

Fig. 2 is a block diagram illustrating a configuration of means for correcting an error between shut detection resistors for current detection, which are used in the control system according to the first embodiment of the present invention.

Fig. 3 is a layout diagram of a semiconductor chip used in the control system according to the first embodiment of the present invention.

Fig. 4 is a circuit diagram for explaining the influence of interconnection wires in the semiconductor chip employed in the control system according to the first embodiment of the present invention.

Fig. 5 is a layout diagram of current detecting shunt resistors and a dummy resistor of the semiconductor chip employed in the control system according to the first embodiment of the present invention.

Fig. 6 is another layout diagram of current detecting shunt resistors and a dummy resistor of the semiconductor chip employed in the control system according to the first embodiment of the present invention.

Fig. 7 is a circuit diagram showing a configuration of an operational amplifier used in the control system according to the first embodiment of the present invention.

Fig. 8 is a timing chart showing the operation of the operational amplifier used in the control system according to the first embodiment of the present invention.

Fig. 9 is a block diagram illustrating another configuration of means for correcting an error between shunt detection resistors for current detection employed in the control system according to the first embodiment of the present invention.

Fig. 10 is a block diagram showing a conceptual configuration of a control system according to a second embodiment of the present invention.

Fig. 11 is a block diagram illustrating a configuration of the control system according to the second embodiment of the present invention.

Fig. 12 is a block diagram showing a conceptual configuration of a control system according to a third embodiment of the present invention.

Fig. 13 is a block diagram depicting a conceptual configuration of a control system according to a fourth embodiment of the present invention.

Fig. 14 is a diagram for explaining voltages to be applied across a current detecting shunt resistor Rsi and a dummy resistor Rd employed in each of the embodiments shown in Figs. 1, 12 and 13.

Fig. 15 is a block diagram showing a configuration of the control system according to the fourth embodiment of the present invention.

Fig. 16 is a block diagram illustrating a configuration of a control system according to a fifth embodiment of the present invention.

Fig. 17 is a block diagram showing a configuration of a control system according to a sixth embodiment of the present invention.

DESCRIPTION OF THE PREFERRED EMBODIMENTS

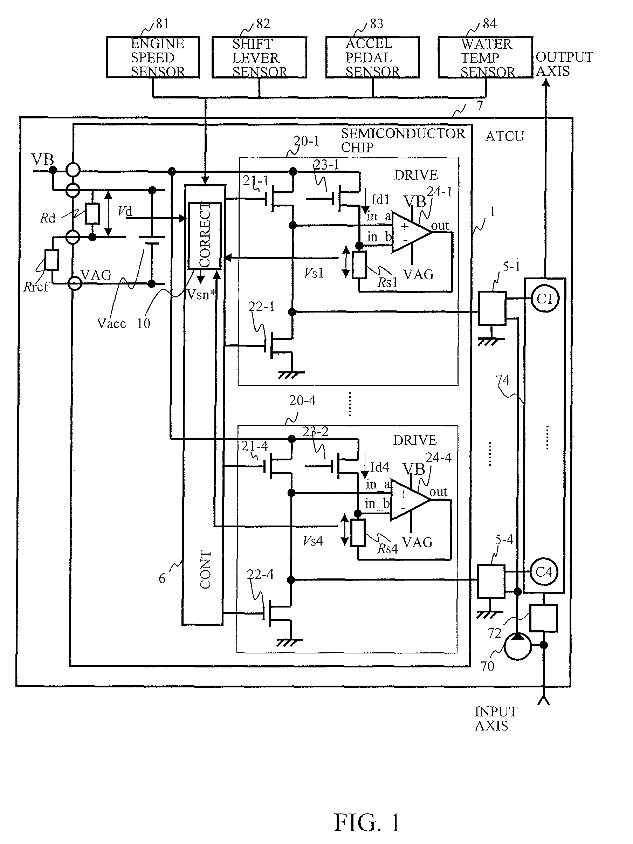

Configurations and operations of a control system according to a first embodiment of the present invention and a semiconductor device used therein will hereinafter be explained using Figs. 1 through 9.

At first, the configuration of the control system according to the present embodiment will be described using Fig. 1.

Fig. 1 is a block diagram showing the configuration of the control system according to the first embodiment of the present invention.

As the control system according to the present embodiment, an automatic transmission control system will be explained herein by way of example.

A drive output from an engine is applied to an input axis of an automatic transmission 74 and transferred to the transmission 74 through a torque converter 72. A drive output from the transmission 74 is transferred via a driving shaft to each wheel through a working gear.

The automatic transmission control system according to the present embodiment supplies oil supplied from a pump 70 to a plurality of clutches C1 through C4 through a plurality of solenoids 5 - 1 through 5 - 4 and controls the unlocking/locking of the clutches C1 through C4, thereby performing speed ratio control. Four clutches are assumed to be provided in the illustrated example. Only the two clutches C1 and C4 are illustrated in the present embodiment.

The automatic transmission control system according to the present embodiment is equipped with a semiconductor chip 1, a plurality of the solenoids 5 - 1 through 5 - 4 driven by drive current outputted from the semiconductor chip 1, and a calibration reference resistor Rref externally attached to the semiconductor chip 1. The calibration reference resistor Rref is of a high-precision resistor small in error. The solenoids 5 - 1 through 5 - 4 are respectively provided corresponding to the clutches C1 through C4. Namely, when the number of clutches is four, the solenoids are also provided four. The solenoids 5 - 1 through 5 - 4 are of inductive loads.

The semiconductor chip 1 has control means 6, a plurality of drive circuits 20 - 1 through 20 - 4, a dummy resistor Rd, and a voltage source Vacc. The drive circuits 20 - 1 through 20 - 4 are respectively provided so as to correspond to the solenoids 5 - 1 through 5 - 4. Namely, when the number of solenoids is four, the drive circuits are also provided four. The drive circuits 20 - 1 through 20 - 4 are respectively equipped with corresponding current detection resistors Rs1 through Rs4 for detecting currents flowing through each of the solenoids 5 - 1 through 5 - 4. The dummy resistor Rd and the current detecting shunt resistors Rs1 through Rs4 are of resistors which are formed inside the semiconductor chip 1 by the same process and consist of diffused resistors or resistors of polysilicon. Incidentally, the configurations of the drive circuits 20 - 1 through 20 - 4 will be described later.

Signals outputted from an engine speed sensor 81, a shift level position sensor 82, an accelerator pedal position sensor 83, a water temperature sensor 84 and the like are inputted to the control means 6. The control means 6 outputs a control command to each of the drive circuits 20 - 1 through 20 - 4 based on these signals. The drive circuits 20 - 1 through 20 - 4 respectively perform a switching operation, based on the control command given from the control means 6 to thereby control the currents flowing through the solenoids 5 - 1 through 5 - 4. The solenoids 5 - 1 through 5 - 4 are respectively driven by the currents supplied from the drive circuits 20 - 1 through 20 - 4 to control the locked states of the clutches C1 through C4, thereby setting an appropriate transmission gear ratio corresponding to a running state.

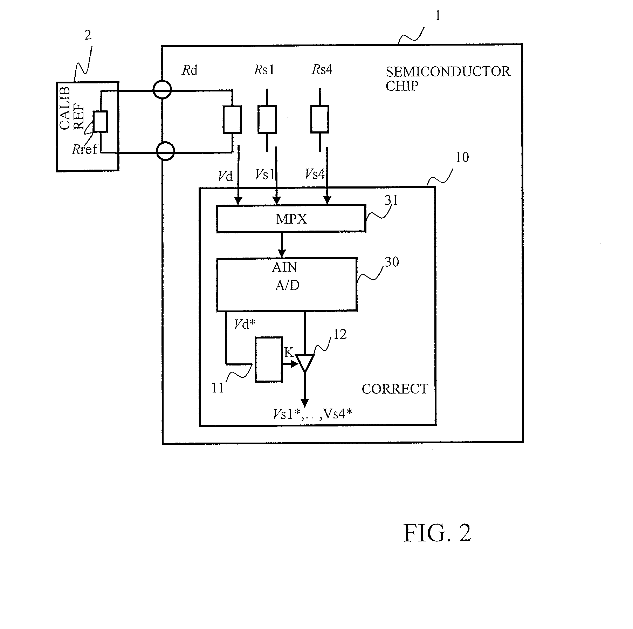

The control means 6 is also equipped with correcting means 10. Load currents Id1 through Id4 flowing through each of the corresponding current detection resistors Rs1 through Rs4 are detected as voltages Vs1 through Vs4 applied across the current detection resistors Rs1 through Rs4 and captured into the correcting means 10. The correcting means 10 corrects the voltages Vs1 through Vs4 by using a voltage Vd applied across the dummy resistor Rd and outputs the same to the control means 6 as post-correction voltages Vsn* (Vs1 through Vs4). The contents to be corrected by the correcting means 10 will be described later using Fig. 2. The control means 6 performs feedback control in such a manner that the currents Id1 through Id4 flowing into the solenoids 5 - 1 through 5 - 4 used as loads are brought to their corresponding command current values set in advance, based on the voltages Vsn* (Vs1 through Vs4) the output from the correcting means 10, thereby on/off-controlling switching elements lying inside the drive circuits 20 - 1 through 20 - 4. Thus, the drive circuits 20 - 1 through 20 - 4 output currents of predetermined values to the solenoids 5 - 1 through 5 - 4. The solenoids 5 - 1 and 5 - 4 operate according to the input current values and supply the oil supplied from the pump 70 to the clutches C1 and C4 as predetermined hydraulic pressure. Consequently, the clutches C1 and C4 are unlocked and locked at predetermined timings. Thus, a smooth speed-changing or shifting operation with no shift shock is realized.

The configurations of the drive circuits 20 - 1 through 20 - 4 will next be explained. Incidentally, since the drive circuits 20 - 1 through 20 - 4 are identical to each other in configuration, the drive circuit 20 - 1 will be explained here.

Output current control MOSFETs 21 - 1 (first output drive semiconductor element) and 22 - 1 (second output drive semiconductor element) are connected in series. A drain terminal (first current input/output terminal) of the MOSFET 21 - 1 is connected to a power supply voltage VB. Here, the power supply voltage VB is a voltage of a battery. A source terminal (second current input/output terminal) of the MOSFET 21 - 1 is connected to a drain terminal (first current input/output terminal) of the MOSFET 22 - 1. A source terminal (second current input/output terminal) of the MOSFET 22 - 1 is grounded. A control signal is inputted from the control means 6 to each of gate terminals (control signal input terminals) of the MOSFETs 21 - 1 and 22 - 1. The MOSFETs 21 - 1 and 22 - 1 are respectively turned on/off by the control signals from the control means 6 to perform switching operations. The MOSFET 21 - 1 configures an upper arm for driving the load, whereas the MOSFET 22 - 1 configures a lower arm. Normally, the load is of an inductive load such as a solenoid, a motor or the like.

When the MOSFET 21 - 1 is turned on and the MOSFET 22 - 1 is turned off, the current supplied from the battery flows into the solenoid 5 - 1 through the MOSFET 21 - 1. When the MOSFET 21 - 1 is turned off and the MOSFET 22 - 1 is turned on, a reverse flow current (fly hall current) flows from the solenoid 5 - 1 through the MOSFET 22 - 1.

The upper arm is provided with a MOSFET (current detection semiconductor element) 23 - 1. A drain terminal (first current input/output terminal) of the MOSFET 23 - 1 is connected to the power supply voltage VB. A source terminal (second current input/output terminal) of the MOSFET 23 - 1 is connected to a first terminal of the current detecting shunt resistor Rs1. The control signal is inputted from the control means 6 to a gate terminal (control signal input terminal) of the MOSFET 23 - 1. Here, the control signal inputted to the gate of the MOSFET 21 - 1 and the control signal inputted to the gate of the MOSFET 23 - 1 are identical. Accordingly, the MOSFETs 21 - 1 and 23 - 1 are turned on/off at the same timing. Thus, the current supplied from the battery is shunted by the MOSFET 21 - 1 and the MOSFET 23 - 1. A shunt ratio is determined according to the width of the gate of the MOSFET 23 - 1 and the width of the gate of the MOSFET 21 - 1. For example, the current flowing through the MOSFET 23 - 1 is set to 1/20 of the current flowing through the MOSFET 21 - 1. When a current of 1A flows through the MOSFET 21 - 1, a current of 0.05A flows through the MOSFET 22 - 1.

A potential difference corresponding to Vs1 = Id·Rs1 occurs across the current detecting shunt resistor Rs1. The current Id flowing through the current detecting shut resistor Rs1 is measured based on the potential difference. Further, the current flowing through the solenoid 5 - 1 can be determined as, for example, 20·Id from the shunt ratio (e.g., 1/20). Reducing the current detecting shunt resistor Rs1 as compared with the current flowing from the MOSFET 21 - 1 to the solenoid 5 - 1 makes it possible to decrease power consumed or used up by the current detecting shunt resistor Rs1.

Further, a connecting point of the source terminal of the MOSFET 21 - 1 and the drain terminal of the MOSFET 22 - 1 is connected to a positive input terminal of an operational amplifier (operational amplifier circuit) 24 - 1. A connecting point of the source terminal of the MOSFET 23 - 1 and the first terminal of the current detecting shunt resistor Rs1 is connected to a negative input terminal of the operational amplifier 24 - 1. An output terminal of the operational amplifier 24 - 1 is connected to a second terminal of the current detecting shunt resistor Rs1.

When a difference in source potential between the MOSFET 22 - 1 and the MOSFET 23 - 1 occurs due to a voltage drop developed across the current detecting shunt resistor Rs1, and hence a difference occurs between both of Vgs (gate-to-source voltage) and Vds (drain-to-source voltage), a shunt ratio between the currents of the two changes. Therefore, the source potentials of the two are corrected so as to be equal to each other using the above operational amplifier 24 - 1 to thereby prevent an error of current detection due to the change in the shunt ratio.

When overcurrent flows through the solenoid 5 - 1, this overcurrent can be detected by the provision of the upper arm with the MOSFET (current detecting semiconductor element) 23 - 1.

Next, the configuration and operation of the correcting means 10 for correcting an error between shunt detection resistors for current detection, which are employed in the control system according to the present embodiment, will be explained using Fig. 2.

Fig. 2 is a block diagram showing the configuration of the correcting means for correcting the error between the shunt detection resistors employed in the control system according to the first embodiment of the present invention. Incidentally, the same reference numerals as those shown in Fig. 1 respectively indicate the same parts in Fig. 2.

The current detecting shunt resistors Rs1 through Rs4 are of resistors which are formed inside the semiconductor chip 1 by the same process and consist of diffused resistors or resistors of polysilicon.

As described above, the value of each resistor formed in the IC chip involves an absolute error of a few tens of % according to variations in process. If one attempts to reduce the absolute error, then high cost is taken for process management, screening and trimming, so that merits given costwise, which are incorporated into the chip, are cancelled out.

Thus, in the present embodiment, the dummy resistor Rd is formed inside the same semiconductor chip 1 by the same process as the current detecting shunt resistors Rs1 through Rs4. The correcting means 10 corrects the resistance values of the current detecting shunt resistors Rs1 through Rs4 using the dummy resistor Rd.

Therefore, a first terminal of the dummy resistor Rd is connected to the external power supply voltage VB through an external terminal of the semiconductor chip 1. A calibration reference resistor Rref is externally connected to the outside of the semiconductor chip 1 between an external terminal connected with a second terminal of the dummy resistor Rd and a VAG terminal. A constant voltage Vacc is applied across a series circuit of the dummy resistor Rd and the calibration reference resistor Rref from a constant voltage source Vacc lying inside the semiconductor chip 1. Incidentally, a voltage VAG (Voltage Analogue Ground) is of a voltage level lower than the power supply voltage VB by the constant voltage Vacc.

As shown in Fig. 2, the correcting means 10 is equipped with a multiplexer 31, an A/D converter 30, a coefficient calculator 11, and a multiplier 12.

Voltages Vs1, ..., Vs4 developed across the current detecting shunt resistors Rs1, ..., Rs4, and a voltage Vd developed across the dummy resistor Rd are inputted to the A/D converter 30 through the multiplexer 31. Incidentally, while only the two current detecting shunt resistors Rs1 and Rs4 are illustrated in Fig. 2, the four current detecting shunt resistors Rs1, ..., Rs4 are provided in association with Fig. 1. The coefficient calculator 11 determines a coefficient K, based on the value of Vd* corresponding to the result of conversion of Vd and multiplies the coefficient by a factor of K through the multiplier 12 to obtain Vs1*, ..., Vs4*.

The principle of correction will be explained below in detail.

The dummy resistor Rd formed within the same chip 1 as the current detecting shunt resistors Rs1, ..., and Rs4 in the same process are connected in series with the standard resistor Rref used as a calibration reference 2 lying outside the chip and divides the constant voltage Vacc taken as the reference shown in Fig. 1. Information about an error in the dummy resistor Rd can be acquired by measuring the voltage Vd applied across the dummy resistor Rd. This error information makes it possible to correct errors in resistance value between the current detecting shunt resistors Rs1, ..., and Rs4, or errors in voltage between detection voltages Vs1, ..., and Vs4.

Since the dummy resistor Rd and the current detecting shunt resistors Rs1, ..., and Rs4 are formed in the same process, their absolute errors are large, but the difference between absolute errors of the individual resistance values thereof, i.e., relative errors become small. This relation is expressed by the following equations (1) and (2):

$$Rd = Rd.\,typ\cdot(1 + \alpha)\cdot(1 + \beta1) \qquad \ldots \ (1)$$

$$Rs = Rs.\,typ\cdot(1 + \alpha)\cdot(1 + \beta2) \qquad \ldots \ (2)$$

where $\alpha$ indicates an absolute error coefficient, $\beta1$ and $\beta2$ indicate relative error coefficients respectively, and Rd. typ, and Rs. typ indicate design values of dummy and shut resistors respectively. Here, $\alpha >> \beta1, \beta2$.

Thus, if the values of the current detecting shunt resistors Rs1, ..., and Rs4 are corrected based on the error information (absolute error coefficient $\alpha$) on the dummy resistor Rd, it is then possible to correct the influence of errors with high accuracy. As a result, the current detecting shunt resistors Rs1, ..., and Rs4 large in absolute error actually can be used in high-accuracy current detection.

In the method of connecting the dummy resistor Rd and the calibration reference resistor Rref in series and dividing the constant voltage Vacc to obtain Vd, the correction is enabled by the following method.

The voltage Vd applied across the dummy resistor Rd is expressed by the following equation (3):

$$Vd = Vacc\cdot Rd/(Rref + Rd) \qquad \ldots \ (3)$$

By transforming the equation (3), the resistance value of the dummy resistor Rd is determined by the following equation (4):

$$Rd = Vd\cdot Rref/(Vacc - Vd) \qquad \ldots \ (4)$$

Since the dummy resistor Rd and the current detecting shunt resistors Rs1, ..., and Rs4 are formed in the same process, the absolute error coefficients $\beta1$ and $\beta2$ are small. Therefore, if they are assumed to be negligible, the equation (4) can be transformed into the following equation (5):

$$Rd = Rd.\,typ\cdot(1 + \alpha) \qquad \ldots \ (5)$$

The term $(1 + \alpha)$ for correction from the equation (5) can be calculated by the following equation (6):

$$(1 + \alpha) = Rd/Rd.\,typ$$
$$= Vd\cdot Rref/\{(Vacc - Vd)\cdot Rd.\,typ\} \quad \ldots \ (6)$$

Similarly, the resistance value of the current detecting shunt resistor Rs is expressed by the following equation (7):

$$Rs = Rs.\ typ \cdot (1 + \alpha)$$

It is possible to compensate for the absolute error in the current detecting shunt resistor Rs by $(1 + \alpha)$ obtained in the above-described manner.

Now, the coefficient K calculated by the coefficient calculator 11 is assumed to be $K = 1/(1 + \alpha)$, based on the equation (6).

The multiplier 12 multiplies the voltages Vs1 to Vs4 applied across the current detecting shunt resistors Rs1, ..., and Rs4 and the voltage Vd applied across the dummy resistor Rd by the coefficient K to thereby obtain corrected detection voltages Vs1*, ..., and Vs4*.

The control means 6 shown in Fig. 1 calculates a current Id1 or the like flowing through the MOSFET 21 - 1 or the like from the corrected detection voltages Vs1*, ..., and Vs4* and the design value Rs. typ of the shunt resistor. Further, the control means 6 is capable of determining the current flowing through the solenoid 5 - 1 or the like as, for example, 20·Id1 by using the shunt ratio (e.g., 1/20) between the MOSFET 21 - 1 and the MOSFET 23 - 1. The control means 6 then on/off-controls the MOSFET 21 - 1 or the like in such a manner that the detected current (20·Id1) coincides with a command value.

The dummy resistor Rd. typ for maximizing the optimum design, i.e., the detection sensitivity of the absolute error coefficient $\alpha$ will be explained subsequently.

Substituting the equation (5) into the equation (3) yields the following equation (7):

$$Vd = Vacc \cdot Rd.\ typ \cdot (1 + \alpha)/(Rref + Rd.\ typ \cdot (1 + \alpha))\ ...\ (7)$$

When the equation (7) is partially differentiated with respect to the absolute error coefficient $\alpha$ to determine a change in the voltage Vd applied across the dummy resistor relative to the detection sensitivity of the absolute error coefficient $\alpha$, i.e., a change in the absolute error coefficient $\alpha$, the result of its partial differentiation assumes the following equation (8):

$$\partial Vd/\partial \alpha = Vacc \cdot Rd.\ typ \cdot Rref/(Rref + Rd.\ typ \cdot (1 + \alpha))^2\ ...\ (8)$$

Next, when the equation (8) is further partially differentiated with respect to the dummy resistor Rd. typ to determine the dummy resistor Rd. typ for maximizing the detection sensitivity of the absolute error coefficient $\alpha$, i.e., the equation (8), the result of its partial differentiation assumes the following equation (9):

$$\partial^2 Vd/\partial \alpha /\partial Rd.\ typ = (Rref^2 - Rd.\ typ2 \cdot (1 + \alpha)^2)/$$

$$(Rref + Rd.\ typ \cdot (1 + \alpha))^4 \qquad\qquad ...\ (9)$$

It is understood that assuming that the left side of the equation (9) is 0 and $\alpha$ is 0, the equation (9) assumes the maximum value and reaches the optimum value when Rd. typ = Rref.

Incidentally, the correcting means 10 repeatedly performs the calculation of $(1 + \alpha)$ for correction every predetermined time. At this time, each of the current detecting shunt resistor Rs and the dummy resistor Rd is of the resistor (resistor consisting of diffused resistor or polysilicon) formed inside the semiconductor chip 1, and such a resistor has temperature dependence. Thus, even when the temperature of the semiconductor chip 1 changes with the calculation of $(1 + \alpha)$ for each predetermined time, it is possible to compensate for the change in the temperature and accurately correct the resistance value of each current detecting shunt resistor. Incidentally, when the temperature of the environment under which the semiconductor chip 1 is placed is substantially constant, the calculation of $(1 + \alpha)$ is performed only once before factory shipment of the semiconductor chip 1, and $(1 + \alpha)$ is stored inside the correcting means 10, whereby the external reference resistor Rref can also be placed in a state of being detached from the semiconductor chip 1 upon its factory shipment.

In the present embodiment as described above, only one high-accuracy calibration reference resistor Rref small in error is externally attached to the outside of the semiconductor chip 1, thereby making it possible to correct the errors between the four current detecting shunt resistors Rs1, ..., and Rs4. Namely, since it is possible to correct the errors between the plural current detecting shunt resistors built in the semiconductor chip 1 by one external resistor alone although the external resistor is necessary, the number of external parts can be reduced, and a size reduction in the apparatus and an increase in the detection accuracy can be achieved.

Incidentally, as the calibration reference 2 provided outside the chip, a constant current source, a constant voltage source, a standard resistor having predetermined accuracy, etc. can be used. When the constant current source is used as the calibration reference 2, a corresponding value can be measured according to the voltage applied across the dummy resistor Rd. When the constant voltage source is used as the calibration reference 2, a corresponding value can be measured according to the current flowing through the dummy resistor Rd. When the standard resistor is used as the calibration reference 2, a corresponding value can be measured by the voltage obtained by connecting the standard resistor and the dummy resistor Rd in series with the constant voltage source and dividing the voltage of the dummy resistor Rd, i.e., the voltage developed across it as described with Fig. 2.

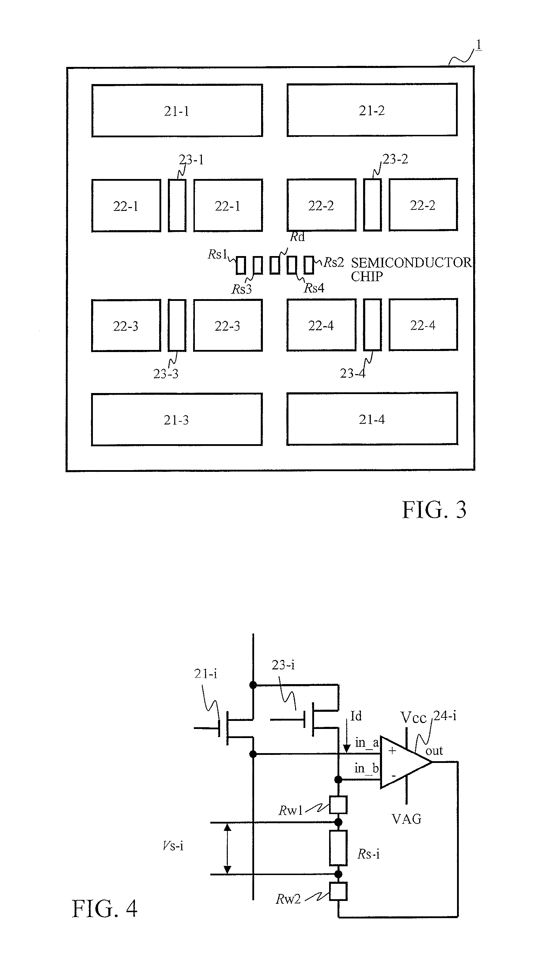

Next, a layout of the semiconductor chip 1 employed in the control system according to the present embodiment will be explained using Figs. 3 and 4.

Fig. 3 is a layout diagram of the semiconductor chip employed in the control system according to the first embodiment of the present invention. Fig. 4 is a circuit diagram for explaining the influence of interconnection wires in the semiconductor chip employed in the control system according to the first embodiment of the present invention. Incidentally, the same reference numerals as those shown in Fig. 1 indicate the same parts in Fig. 3.

While only the two drive circuits 20 - 1 and 20 - 4 are illustrated in Fig. 1, the control system shown in Fig. 1 is equipped with the four drive circuits as described in Fig. 1. A layout of respective components where four drive circuits are used is shown herein.

In Fig. 3, MOSFETs 21 - 1, 21 - 2, 21 - 3 and 21 - 4 and MOSFETs 22 - 1, 22 - 2, 22 - 3, and 22 - 4, which configure drivers, and current detecting MOSFETs 23 - 1, 23 - 2, 23 - 3 and 23 - 4 are disposed in dispersed form on the chip to prevent concentration of the heat generation.

Incidentally, while the MOSFETs 22 - 1, 22 - 2, 22 - 3, and 22 - 4 are respectively illustrated two by two as square frames in the example shown in Fig. 3, the MOSFETs 22 - 1 illustrated by two square frames, for example, are disposed by dividing one MOSFET 22 - 1, and the current detecting MOSFET 23 - 1 is laid out in the center between these.

A dummy resistor Rd and current detecting shunt resistors Rs1, Rs2, Rs3 and Rs4 are disposed in the center of the chip in a concentrated manner to reduce relative errors. Further, in the present example, the dummy resistor Rd is disposed in the center of the current detecting shunt resistors Rs1, Rs2, Rs3 and Rs4 so as to represent the absolute error characteristics of the current detecting shunt resistors Rs1, Rs2, Rs3 and Rs4.

Incidentally, such a layout makes longer wires between the MOSFETs 23 - 1, 23 - 2, 23 - 3 and 23 - 4 and each of the corresponding current detecting shunt resistors Rs1, Rs2, Rs3 and Rs4.

A method of reducing the influence of the wires where they are long will now be explained using Fig. 4. Incidentally, suffixes of i of 21 - i, etc. respectively indicate 1 to 4 in Fig. 4.

When the wires are long, the current can be detected without being affected by wiring resistors Rw1 and Rw2 if the voltage of each part is taken out, as shown in Fig. 4. If input terminals of an operational amplifier 24 - i are connected to their corresponding source terminals of the MOSFETs 21 - i and 23 - i as shown in Fig. 4, then the potentials at the source terminals of the MOSFETs 22 - i and 23 - i can be made equal to each other without depending on the wiring resistors Rw1 and Rw2. If the voltage is taken out from both ends of the current detecting shunt resistor Rs - i as shown in Fig. 4, a detection voltage Vs can be measured without depending on the wiring resistors Rw1 and Rw2.

It is desirable that the dummy resistor Rd and the current detecting shunt resistors Rs1, ..., and Rs4 are identical in shape to one another, i.e., they are identical in value to one another to enhance the correlation between the absolute error characteristics due to mask position displacements.

Here, the current detecting shunt resistors Rs1, ..., and Rs4 are preferably values of a few tens of $\Omega$ to one hundred of $\Omega$ or so in terms of their uses. The dummy resistor Rd is desirably identical to the reference resistor Rref, i.e., a value of a few hundreds of $\Omega$ to a few k$\Omega$. It is therefore considered that as for the dummy resistor Rd, a predetermined resistance value is realized by connecting in series a plurality of resistive elements identical to the current detecting shunt resistors Rs1, ..., and Rs4. It is considered that the current detecting shunt resistors Rs1, ..., and Rs4 are realized by connecting a plurality of resistive elements in parallel.

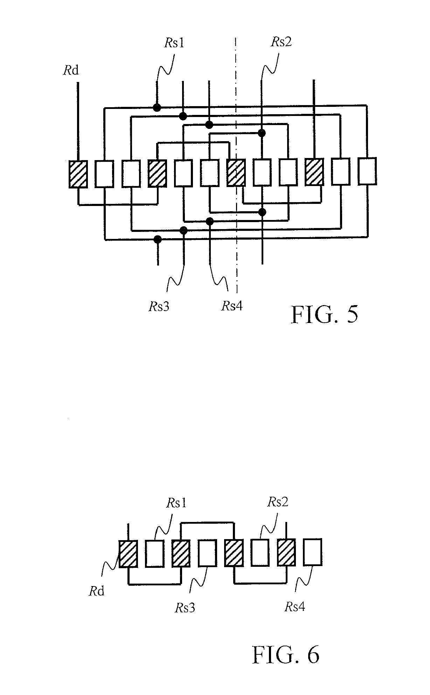

Next, a layout of current detecting shunt resistors Rs1, ..., and Rs4 and a dummy resistor Rd of the semiconductor chip 1 employed in the control system according to the present embodiment will be explained using Fig. 5.

Fig. 5 is a layout diagram of the current detecting shunt resistors and the dummy resistor of the semiconductor chip employed in the control system according to the first embodiment of the present invention. Incidentally, the same reference numerals as those shown in Fig. 3 respectively indicate the same parts in Fig. 5.

Square frames shown in Fig. 5 respectively indicate resistive elements all identical in shape and size. The twelve resistive elements are arranged linearly.

Here, the first, fourth, seventh and tenth resistive elements as viewed from the left are connected in series to configure the dummy resistor Rd. The second and twelfth resistive elements as viewed from the left are connected in parallel to configure the current detecting shunt resistor Rs1. The sixth and eighth resistive elements as viewed from the left are connected in parallel to configure the current detecting shunt resistor Rs2. The third and eleventh resistive elements as viewed from the left are connected in parallel to configure the current detecting shunt resistor Rs3. The fifth and ninth resistive elements as viewed from the left are connected in parallel to configure the current detecting shunt resistor Rs4.

Thus, the resistive elements that configure the dummy resistor Rd by the series connection are disposed alternately with the resistive elements that configure the current detecting shunt resistors Rs1, ..., and Rs4. The resistive elements that configure the current detecting shunt resistors Rs1, ..., and Rs4 are disposed symmetrically (in common centroid form) with respect to the center line.

The configurations described above make it possible to reduce relative errors between the dummy resistor Rd and the current detecting shunt resistors Rs1, ..., and Rs4.

In the present example, the dummy resistor Rd has a resistance value equal to eight times the resistance value of the current detecting shunt resistors Rs1, ..., and Rs4. Thus, assuming that the resistance value of each of the twelve resistive elements is 100Ω, for example, the resistance value of the dummy resistor Rd becomes 400Ω, and the resistance value of the current detecting shunt resistors Rs1, ..., and Rs4 becomes 50Ω. Accordingly, the present example can satisfy the conditions that the current detecting shunt resistors Rs1, ..., and Rs4 is desirably a value of a few tens of Ω to one hundred of Ω or so in terms of their uses, and the dummy resistor Rd is the same as the reference resistor Rref, i.e., it is desirably a value of a few hundreds of Ω to a few kΩ. Further, the resistive elements that configure the dummy resistor Rd, and the resistive elements that configure the current detecting shunt resistors Rs1, ..., and Rs4 are made identical in size and shape, thereby making it possible to reduce relative error coefficients β1 and β2 between the two resistors and ignore them.

Next, another layout of current detecting shunt resistors Rs1, ..., and Rs4 and a dummy resistor Rd of the semiconductor chip 1 employed in the control system according to the present embodiment will be explained using Fig. 6.

Fig. 6 is another layout diagram of the current detecting shunt resistors and the dummy resistor of the semiconductor chip employed in the control system according to the first embodiment of the present invention. Incidentally, the same reference numerals as those shown in Fig. 5 respectively indicate the same parts in Fig. 6.

Square frames shown in Fig. 6 respectively indicate resistive elements all identical in shape and size. The eight resistive elements are arranged linearly.

Here, the first, third, fifth and seventh resistive elements as viewed from the left are connected in series to configure the dummy resistor Rd. The second resistive element as viewed from the left configures the current detecting shunt resistor Rs1. The sixth resistive element as viewed from the left configures the current detecting shunt resistor Rs2. The fourth restive element as viewed from the left configures the current detecting shunt resistor Rs3. The eighth resistive element as viewed from the left configures the current detecting shunt resistor Rs4.

Thus, the resistive elements that configure the dummy resistor Rd by the series connection are disposed alternately with the resistive elements that configure the current detecting shunt resistors Rs1, ..., and Rs4. The resistive elements that configure the current detecting shunt resistors Rs1, ..., and Rs4 are disposed symmetrically (in common centroid form) with respect to the center line.

The configurations described above make it possible to reduce relative errors between the dummy resistor Rd and the current detecting shunt resistors Rs1, ..., and Rs4.

In the present example, the dummy resistor Rd has a resistance value equal to four times the resistance value of the current detecting shunt resistors Rs1, ..., and Rs4. Thus, assuming that the resistance value of each of the eight resistive elements is 100Ω, for example, the resistance value of the dummy resistor Rd becomes 400Ω, and the resistance value of the current detecting shunt resistors Rs1, ..., and Rs4 becomes 100Ω. Accordingly, the present example can satisfy the conditions that the current detecting shunt resistors Rs1, ..., and Rs4 may desirably be a value of a few tens of Ω to one hundred of Ω or so from their uses, and the dummy resistor Rd is the same as the reference resistor Rref, i.e., it may desirably be a value of a few hundreds of Ω to a few kΩ. Further, the resistive elements that configure the dummy resistor Rd, and the resistive elements that configure the current detecting shunt resistors Rs1, ..., Rs4 are made identical in size and shape, thereby making it possible to reduce relative error coefficients β1 and β2 between the two resistors and ignore them.

Incidentally, although the dummy resistor Rd and the current detecting shunt resistors Rs1, ..., and Rs4 are one-dimensionally disposed in the examples shown in Figs. 5 and 6, they may be disposed two-dimensionally. Even when they are arranged two-dimensionally, the resistive elements that configure the dummy resistor Rd are alternately placed with the resistive elements that configure the current detecting shunt resistors Rs1, ..., and Rs4, and the resistive elements that configure the current detecting shunt resistors Rs1, ..., and Rs4 are disposed symmetrically (in common centroid form) with respect to the center, thereby making it possible to reduce relative errors between the dummy resistor Rd and the current detecting shut resistors Rs1, ..., and Rs4.

Here, process conditions such as an exposure condition, etc. at the time of manufacture of the semiconductor chip 1 are dependent on the coordinates. As the coordinates of the elements on the chip become closer, there is high correlation therebetween. Therefore, the current detecting shunt resistors and the dummy resistor are desirably laid out close to one another. Further, they are desirably arranged in common centroid form.

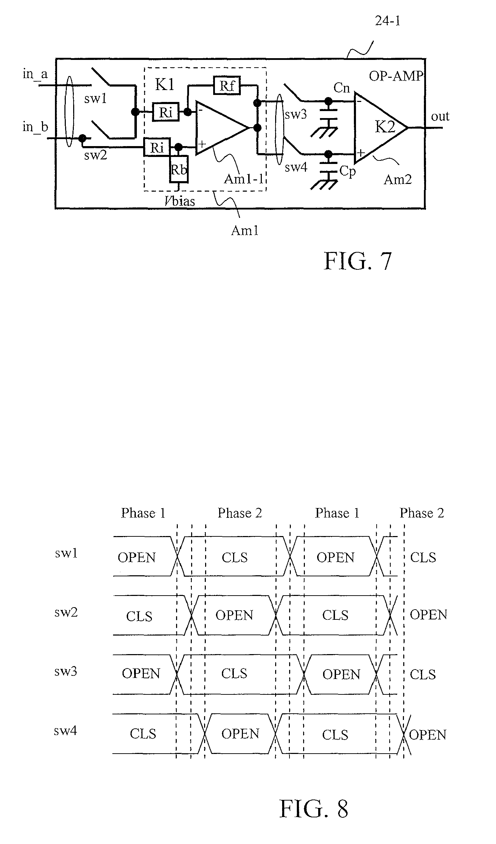

Next, a configuration of the operational amplifier 24 - 1 employed in the control system according to the present embodiment will be explained using Figs. 7 and 8.

Fig. 7 is a circuit diagram showing the configuration of the operational amplifier employed in the control system according to the first embodiment of the present invention. Fig. 8 is a timing chart showing the operation of the operational amplifier employed in the control system according to the first embodiment of the present invention. Incidentally, the same reference numerals as those shown in Fig. 1 respectively indicate the same parts in Fig. 7.

While the configuration of the operational amplifier 24 - 1 is illustrated in Fig. 7, the operational amplifiers 24 - 4 and the like shown in Fig. 1 also have the same configuration.

The operational amplifier 24 - 1 is realized by a low-noise chopper amplifier. The operational amplifier 24 - 1 comprises four switches Sw1, Sw2, Sw3 and Sw4, two amplifiers Am1 and Am2, and two capacitors Cn and Cp. The amplification factor or gain of the amplifier Am1 is assumed to be K1, and the amplification factor or gain of the amplifier Am2 is assumed to be K2.

Two inputs in_a and in_b shown also in Fig. 1 are inputted to the Amp1 through the switches Sw1 and Sw2 respectively. The amplifier Am1 comprises an operational amplifier Am1 - 1, two input resistors Ri, a feedback resistor Rf, and a bias resistor Rb. One of the two inputs in_a and in_b is selected by the switches Sw1 and Sw2 and inputted to a negative input terminal of the operational amplifier Am1 - 1 through the input resistor Ri. The input in_b is inputted to a positive input terminal of the operational amplifier Am1 - 1 through the input resistor Ri. A bias voltage Vbias is inputted to the positive input terminal of the operational amplifier Am1 - 1 through the bias resistor Rb.

The output of the amplifier Am1 is selected by the switches Sw3 and Sw4 and inputted to either a negative input terminal or a positive input terminal of the amplifier Am2. The capacitors Cn and Cp are respectively connected to the negative and positive input terminals of the amplifier Am2.

The switches Sw1 through Sw4 are opened/closed at timings shown in Fig. 8.

During a Phase 1, the switches Sw1 and Sw3 are opened and the switches Sw2 and Sw4 are closed. A voltage Vn expressed in the following equation (10) is thus outputted from the amplifier Am1:

$$\text{Vn} = \text{K1} \cdot (\text{in\_b} - \text{in\_a} + \text{Vofs1}) + \text{Vbias} \qquad \dots \ (10)$$

However, where Vof1 indicates an offset (input conversion) of the amplifier Am1, K1 indicates the gain (Rf/Ri) of the amplifier Am1, and Vbias indicates the bias voltage (used to allow its operating voltage to be set between a power supply and GND).

The voltage Vn is charged into the capacitor Cn through the switch Sw3.

During a Phase 2, the switches Sw2 and Sw4 are opened and the switches Sw1 and Sw3 are closed. A voltage Vp expressed in the following equation (11) is thus outputted from the amplifier Am1:

$$\text{Vp} = \text{K1} \cdot (\text{Vofs1}) + \text{Vbias} \qquad \dots \ (11)$$

This voltage Vp is charged into the capacitor CP through the switch Sw4. At this time, the voltage Vn expressed in the previous equation (10) is held in the capacitor Cn.

During the Phase 1 again, the switches Sw1 and Sw3 are opened and the switches Sw2 and Sw4 are closed. The voltage Vn expressed in the equation (10) is thus outputted from the amplifier Am1 and charged into the capacitor Cn through the switch Sw3, and the voltage Vp expressed in the previous equation (11) is held in the capacitor Cp.

The above operation is repeated and hence a voltage out expressed in the following equation (12) is outputted from an output terminal of the amplifier Am2:

$$\text{out} = \text{K2} \cdot (\text{K1} \cdot (\text{in\_a} - \text{in\_b}) + \text{Vofs2}) \qquad \dots \ (12)$$

However, where Vofs2 indicates an offset (input conversion) of the amplifier Am2, and K2 indicates the gain of the amplifier Am2.

As is apparent from the equation (12), the offset Vofs1 of the amplifier Am1 is cancelled out and only the offset Vofs2 of the amplifier Am2 is multiplied by K2 and outputted. Namely, if K1>>K2, it is then possible to reduce an influence exerted on the output of the offset Vofs2 of the amplifier Am2. Further, the operational amplifier 24 - 1 is feedback-operated to make a convergence of in_a → in_b, thus resulting in a convergence of Vp → Vn. Thus, since the difference in potential at which the switches Sw1 and Sw2 and the switches Sw3 and Sw4 perform switching operations converges to 0, switching noise associated with the chopper operation can be reduced.

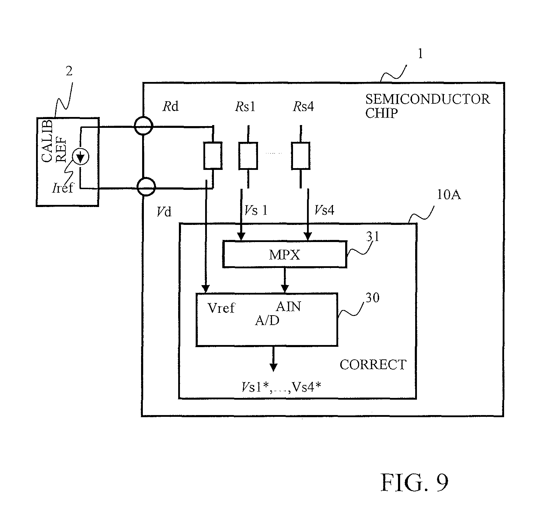

Next, another configuration and operation of means for correcting an error between shunt detection resistors for current detection, which are employed in the control system according to the present embodiment, will be explained using Fig. 9.

Fig. 9 is a block diagram showing another configuration of the means for correcting the error between the shunt detection resistors for current detection, which are employed in the control system according to the first embodiment of the present invention. Incidentally, the same reference numerals as those shown in Figs. 1 and 2 respectively indicate the same parts in Fig. 9.

As shown in Fig. 9, the correcting means 10A is equipped with a multiplexer 31 and an A/D converter 30.

Voltages Vs1, ..., and Vs4 respectively applied across the current detecting shunt resistors Rs1, ..., and Rs4 are inputted to the A/D converter 30 through the multiplexer 31. Incidentally, while only the two current detecting shunt resistors Rs1 and Rs4 are illustrated in Fig. 9, the four current detecting shunt resistors Rs1, ..., and Rs4 are provided corresponding to Fig. 1.

A voltage Vd applied across a dummy resistor Rd is inputted to a Vref input terminal of the A/D converter 30 as a reference voltage Vref for analog-to-digital conversion.

In the present example, a constant current source for supplying a constant current Iref is used as a calibration reference 2, thereafter a voltage which satisfies Vref = Iref·Rd as the reference voltage Vref for analog-to-digital conversion, and which is proportional to that of the dummy resistor Rd can be obtained. Carrying out the analog-to-digital conversion with the voltage Vref as the reference yields Vs1* = K·Vs1/Vref. Here, K indicates a coefficient.

If the assumption is made that the relative error coefficients β1 and β2 can be ignored because they are small in the above equations (1) and (2), then they are rewritten into the following equations (10) and (11) :

$$\mathrm{Rs} \ = \ \mathrm{Rs.\ typ} \cdot (1 \ + \ \alpha) \qquad \qquad \ldots \ (10)$$

$$\mathrm{Rd} \ = \ \mathrm{Rd.\ typ} \cdot (1 \ + \ \alpha) \qquad \qquad \ldots \ (11)$$

Thus, since the voltage Vref is also brought to $(1 + \alpha)$ when the voltage Vs1 reaches $(1 + \alpha)$ times, it is possible to compensate for the absolute error of the current detecting shunt resistor Rs.

Incidentally, although the number of solenoids to be controlled has been explained as four and the number of current detecting shunt resistors has also been explained as four in Fig. 1, the number of objects to be controlled may be two or more.

According to the present embodiment as described above, the high-precision current detecting means can be incorporated into a one-chip LSI and realized at a lower cost.

It is possible to realize a smoother operation free of shift shocks by the current control high in precision.

Since the control circuit can be integrated into the same semiconductor chip 1, the control system can be brought into less size.

It is possible to perform not only a reduction in the shift shock but also a reduction in the mechanical stress applied to the automatic transmission, by virtue of sensitive control of each clutch. The automatic transmission per se can thus be brought into less size and weight.

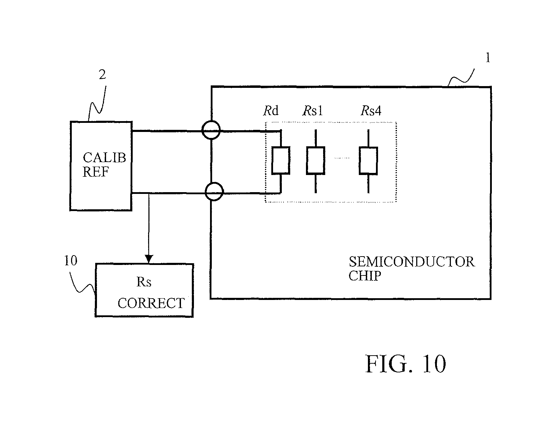

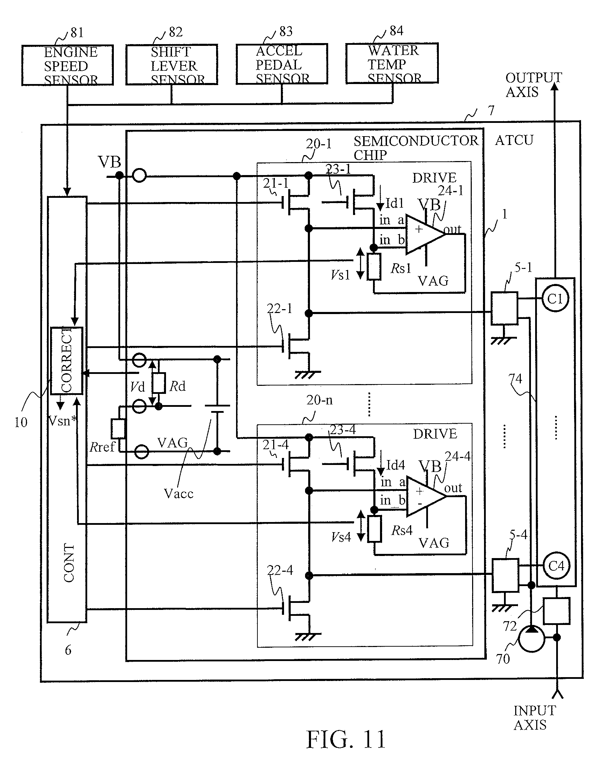

Next, a configuration and operation of a control system according to a second embodiment of the present invention will be explained using Figs. 10 and 11.

A conceptual configuration of the control system according to the present embodiment will first be explained using Fig. 10.

Fig. 10 is a block diagram showing the conceptual configuration of the control system according to the second embodiment of the present invention.

In the example shown in Fig. 1, the correcting means 10 for correcting the error between current detecting shunt resistors has been provided inside the semiconductor chip 1. On the other hand, in the present embodiment, correcting means 10 is provided outside a semiconductor chip 1 as shown in Fig. 10.

Next, a concrete configuration of the present embodiment will be explained using Fig. 11.

Fig. 11 is a block diagram showing the configuration of the control system according to the second embodiment of the present invention.

An automatic transmission control system will be explained here as the control system 7 according to the present embodiment by way of example.

A drive output from an engine is applied to an input axis of an automatic transmission 74 and transferred to the transmission 74 through a torque converter 72. A drive output from the transmission 74 is transferred via a driving shaft to each wheel through a working gear.

The automatic transmission control system according to the present embodiment supplies oil supplied from a pump 70 to a plurality of clutches C1 through C4 through a plurality of solenoids 5 - 1 through 5 - 4 and controls the unlocking/locking of the clutches C1 through C4, thereby performing speed ratio control. Four clutches are assumed to be provided in the illustrated example. Only the two clutches C1 and C4 are illustrated in the present embodiment.

The automatic transmission control system according to the present embodiment is equipped with a semiconductor chip 1, a plurality of solenoids 5 - 1 through 5 - 4 driven by drive current outputted from the semiconductor chip 1, a calibration reference resistor Rref added to the semiconductor chip 1 externally, and control means 6. The calibration reference resistor Rref is of a high-precision resistor small in error. The solenoids 5 - 1 through 5 -4 are respectively provided corresponding to the clutches C1 through C4. Namely, when the number of clutches is four, the solenoids are also provided four. The solenoids 5 - 1 and 5 - 4 are of inductive loads.

The semiconductor chip 1 has a plurality of drive circuits 20 - 1 through 20 - 4, a dummy resistor Rd, and a voltage source Vacc. The drive circuits 20 - 1 through 20 - 4 are respectively provided so as to correspond to the solenoids 5 - 1 through 5 - 4. Namely, when the number of solenoids is four, the drive circuits are also provided four. The drive circuits 20 - 1 through 20 - 4 are respectively equipped with current detection resistors Rs1 through Rs4 for detecting currents flowing through the solenoids 5 - 1 through 5 - 4. The dummy resistor Rd and the current detecting shunt resistors Rs1 through Rs4 are of resistors which are formed inside the semiconductor chip 1 by the same process and consist of diffused resistors or resistors of polysilicon. The configurations and operations of the drive circuits 20 - 1 and 20 - 4 are identical to those described in Fig. 1.

The control means 6 is equipped with correcting means 10. Signals outputted from an engine speed sensor 81, a shift level position sensor 82, an accelerator pedal position sensor 83, a water temperature sensor 84 and the like are inputted to the control means 6. The control means 6 drives the solenoids 5 - 1 through 5 - 4, based on these signals to control the locked states of the clutches C1 through C4, thereby setting an appropriate transmission ratio corresponding to a running state.

Load currents Id1 through Id4 flowing through the current detecting resistors Rs1 through Rs4 are detected as voltages Vs1 through Vs4 applied across the current detecting resistors Rs1 through Rs4 and captured into the correcting means 10. The correcting means 10 corrects the voltages Vs1 through Vs4 by using a voltage Vd applied across the dummy resistor Rd and outputs the same to the control means 6 as post-correction voltages Vsn* (Vs1 through Vs4). The contents to be corrected by the correcting means 10 will be described later using Fig. 2. The control means 6 performs feedback control in such a manner that the currents Id1 through Id4 flowing into the solenoids 5 - 1 through 5 - 4 used as loads are brought to their corresponding command current values set in advance, based on the voltages Vsn* (Vs1 through Vs4) output from the correcting means 10, thereby on/off-controlling switching elements lying inside the drive circuits 20 - 1 through 20 - 4. Thus, the drive circuits 20 - 1 through 20 - 4 output currents of predetermined values to the solenoids 5 - 1 through 5 - 4. The solenoids 5 - 1 through 5 - 4 operate according to the input current values and supply the oil supplied from the pump 70 to the clutches C1 through C4 with predetermined hydraulic pressure. Consequently, the clutches C1 through C4 are unlocked and locked at predetermined timings. Thus, a smooth speed-changing or shifting operation with no shift shock is realized.

According to the present embodiment, the current detecting shunt resistors can be incorporated into a one-chip LSI and realized at a lower cost.

It is possible to realize a smoother operation free of shift shocks by the current control high in precision.

It is possible to perform not only a reduction in the shift shock but also a reduction in the mechanical stress applied to the automatic transmission, by virtue of sensitive control of each clutch. Thus, the automatic transmission per se can also be brought into less size and weight.

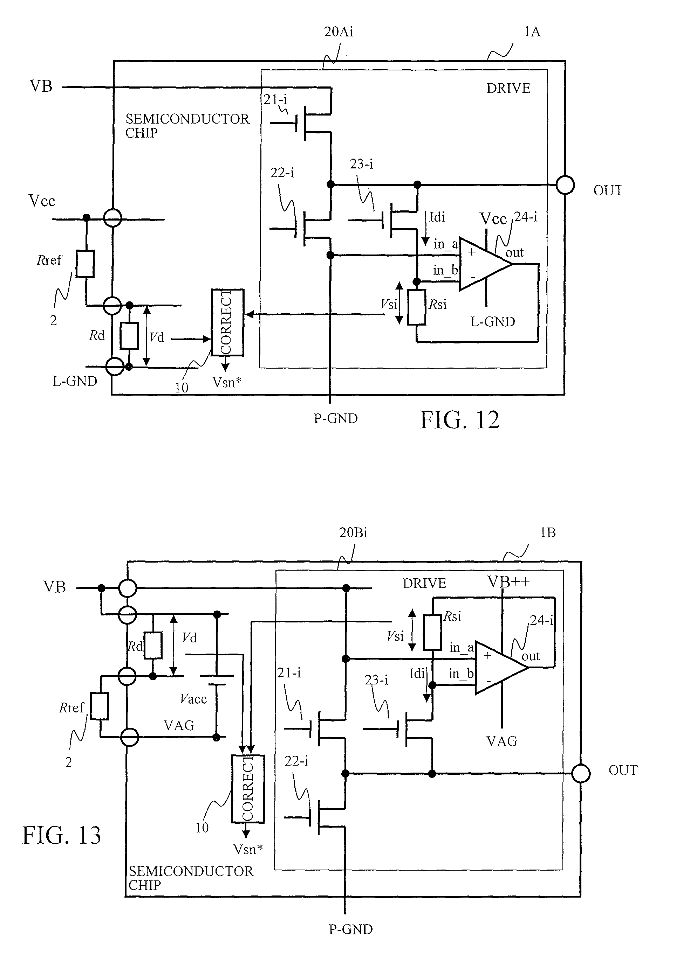

Next, a configuration and operation of a control system according to a third embodiment of the present invention will be explained using Fig. 12.

Fig. 12 is a block diagram showing a conceptual configuration of the control system according to the third embodiment of the present invention.

In the example shown in Fig. 1, the current detecting shunt resistor Rs and the MOSFET 23 for allowing the electric current to pass through the current detecting shunt resistor Rs have been provided on the upper arm side in the drive circuit 20.

On the other hand, in the present embodiment, a current detecting shunt resistor Rs and a MOSFET 23 for allowing electric current to pass through the resistor Rs are provided on the lower arm side.

In Fig. 12, a semiconductor chip 1A is equipped with a drive circuit 20Ai, a dummy resistor Rd, and correcting means 10. Incidentally, while the suffix i in the drive circuit 20Ai is intended to denote drive circuits provided in plural form as in 1, 2, 3, ..., the respective drive circuits are identical in configuration to one another, and one thereof is typically illustrated in the example shown in the figure.

The semiconductor chip 1A is externally provided with a reference resistor Rref. Loads to be driven are connected between an OUT terminal of the semiconductor chip 1A and a P-GND terminal as shown in Fig. 12. The loads to be driven are inductive loads such as solenoids, a motor, etc. in many cases.

The drive circuit 20Ai is equipped with a MOSFET 21 - i, a MOSFET 22 - i, a MOSFET 23 - i, a current detecting shunt resistor Rsi, and an operational amplifier 24 - i.

The MOSFET 21 - i configures an upper arm for driving the load, whereas the MOSFET 22 - i configures a lower arm. The lower arm is provided with the MOSFET 23 - i for current detection. The MOSFET 22 - i and the MOSFET 23 - i shunt the current at a predetermined ratio. The current detecting shunt resistor Rsi is connected to the source side of the MOSFET 23 - i. A difference in potential corresponding to $Vsi = Id \cdot Rsi$ is developed across the current detecting shunt resistor Rsi. Idi flowing through the current detecting shunt resistor Rsi is measured based on the difference in potential, and the current flowing through the load is further determined from a shunt ratio.

When a difference in source potential between the MOSFET 22 - i and the MOSFET 23 - i occurs due to a voltage drop developed across the current detecting shunt resistor Rsi, and thereby a difference occurs between both of Vgs (gate-to-source voltage) and Vds (drain-to-source voltage), a shunt ratio between the currents of the two changes. Therefore, the source potentials of the two are corrected so as to be equal to each other by the operational amplifier 24 - i to thereby make it possible to prevent an error in current detection due to the change in the shunt ratio.

The dummy resistor Rd formed in the same process inside the same chip 1A as the current detecting shunt resistor Rsi is connected in series with the standard resistor Rref used as a calibration reference 2 lying outside the chip and thereby divides a constant voltage Vcc. Information about an error in the dummy resistor Rd can be acquired by measuring a voltage Vd applied across the dummy resistor Rd. This error information makes it possible to correct an error in the current detecting shunt resistor Rsi, or an error in Vsi.

In the method of connecting the dummy resistor Rd and the calibration reference resistor Rref in series and dividing the constant voltage Vcc to obtain Vd as in the present example, the correcting means 10 can calculate $(1 + \alpha)$ by using the voltage Vcc instead of the voltage Vacc when $(1 + \alpha)$ is determined by the equation (6) described in Fig. 2. It is possible to correct the error in the current detecting shunt resistor Rsi or the error in Vsi by using this $(1 + \alpha)$.

Incidentally, the correcting means 10 can also be provided outside the semiconductor chip 1 as described in Fig. 10.

According to the present embodiment, the current detecting shunt resistor can be incorporated in a one-chip LSI and realized at a lower cost.

Next, a configuration and operation of a control system according to a fourth embodiment of the present invention will be explained using Fig. 13.

Fig. 13 is a block diagram showing a conceptual configuration of the control system according to the fourth embodiment of the present invention.

In the present embodiment, a current detecting shunt resistor Rs and a MOSFET 23i for allowing electric current to pass through the resistor Rs are provided on the upper arm side. Further, the corresponding current detecting shunt resistor Rsi is connected to the drain side of the current detecting MOSFET 23i of the upper arm. The basic principle of this example is similar to that shown in Fig. 1.

In Fig. 13, a semiconductor chip 1B is equipped with a drive circuit 20Bi, a dummy resistor Rd, and correcting means 10. Incidentally, while the suffix i in the drive circuit 20Bi is intended to denote drive circuits provided in plural form as in 1, 2, 3, ..., the respective drive circuits are identical in configuration to one another, and one thereof is typically illustrated in the example shown in the figure.

The semiconductor chip 1B is externally provided with a reference resistor Rref. Loads to be driven are connected between an OUT terminal of the semiconductor chip 1B and a P-GND terminal as shown in Fig. 13. The loads to be driven are inductive loads such as solenoids, a motor, etc. in many cases.

The drive circuit 20Bi is equipped with a MOSFET 21 - i, a MOSFET 22 - i, a MOSFET 23 - i, a current detecting shunt resistor Rsi, and an operational amplifier 24 - i.

The MOSFET 21 - i configures the upper arm for driving the load, whereas the MOSFET 22 - i configures a lower arm. The upper arm is provided with the MOSFET 23 - i for current detection. The MOSFET 21 - i and the MOSFET 23 - i shunt the current at a predetermined ratio. The current detecting shunt resistor Rsi is connected to the drain side of the MOSFET 23 - i. A difference in potential corresponding to $Vsi = Id \cdot Rsi$ is developed across the current detecting shunt resistor Rsi. Idi flowing through the current detecting shunt resistor Rsi is measured based on the difference in potential, and the current flowing through the load is further determined from a shunt ratio.

When a difference in source potential between the MOSFET 21 - i and the MOSFET 23 - i occurs due to a voltage drop developed across the current detecting shunt resistor Rsi, and thereby a difference occurs between both of Vgs (gate-to-source voltage) and Vds (drain-to-source voltage), a shunt ratio between the currents of the two changes.

Therefore, the source potentials of the two are corrected so as to be equal to each other by the operational amplifier 24 - i to thereby make it possible to prevent an error in current detection due to the change in the shunt ratio.

The dummy resistor Rd formed in the same process inside the same chip 1A as the current detecting shunt resistor Rsi is connected in series with the standard resistor Rref used as a calibration reference 2 lying outside the chip and thereby divides a constant voltage Vcc. Information about an error in the dummy resistor Rd can be obtained by measuring a voltage Vd applied across the dummy resistor Rd. This error information makes it possible to correct an error in the current detecting shunt resistor Rsi, or an error in Vsi.

In the method of connecting the dummy resistor Rd and the calibration reference resistor Rref in series and dividing the constant voltage Vacc to obtain Vd as in the present example, the correcting means 10 can calculate (1 + $\alpha$) in accordance with the equation (6) described in Fig. 2. It is possible to correct the error in the current detecting shunt resistor Rsi or the error in Vsi by using this (1 + $\alpha$).

Incidentally, the correcting means 10 can also be provided outside the semiconductor chip 1 as described in Fig. 10.

According to the present embodiment, the current detecting shunt resistor can be incorporated in a one-chip LSI and realized at a lower cost.

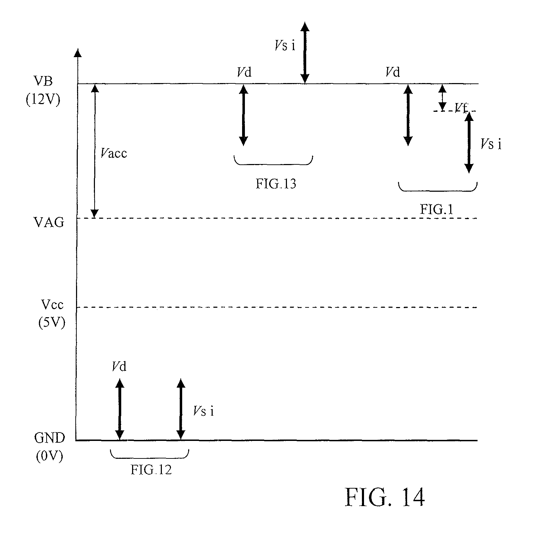

Next, the voltages applied to the current detecting shunt resistor Rsi and the dummy resistor Rd employed in each of the embodiments shown in Figs. 1, 12 and 13 will be explained using Fig. 14.

Fig. 14 is a diagram for describing the voltages applied to the current detecting shunt resistor Rsi and the dummy resistor Rd employed in each of the embodiments shown in Figs. 1, 12 and 13.

Since the resistors formed within the semiconductor chip are not completely isolated from a semiconductor substrate and PN junctions are parasitic thereto, voltage dependence exists. It is therefore desirable that the voltages to be applied to the resistors Rsi and Rd are also made identical to cause the characteristics of the current detecting shunt resistor Rsi and the dummy resistor Rd to coincide with each other.

In the embodiment shown in Fig. 12, each applied voltage is set as the potential lower than the voltage Vcc and close to the voltage GND (0V). In the embodiments shown in Figs. 13 and 1, the applied voltage is set as the potential near the voltage VB (battery voltage). It is desirable that since the potential higher than the voltage VB is applied to the current detecting shunt resistor Rsi in the embodiment of Fig. 13, the potential (VB++) higher than VB without applying VB is applied even to the dummy resistor Rd if possible.

The power supply voltages supplied to the analog circuits for current detection become the voltage Vcc and the voltage GND in the embodiment of Fig. 12, the potential (VB++) higher than the voltage VB and the voltage VAG lower than the voltage VB by the voltage Vacc in the embodiment of Fig. 13, and the voltage VB and the voltage VAG in the embodiment shown in Fig. 1. Of these, the voltages Vcc and VAG can be generated by performing division between the voltages VB and GND, but the potential (VB++) higher than the voltage VB needs to be generated using a charge pump. Therefore, the embodiment of Fig. 13 becomes slightly complicated in circuit as compared with the embodiments of Figs. 12 and 1.

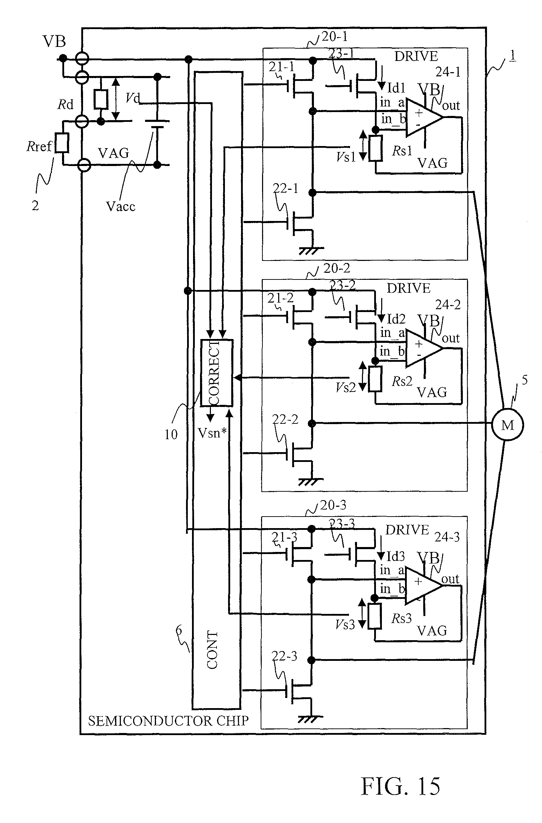

Next, a configuration and operation of a control system according to a fourth embodiment of the present invention will be explained using Fig. 15.

Fig. 15 is a block diagram showing the configuration of the control system according to the fourth embodiment of the present invention.

As the control system according to the present embodiment, a control system of a DC brushless motor 5 will now be explained by way of example.

The DC brushless motor (three-phase synchronous motor) 5 is equipped with three phase coils of U, V and W phases. The three phase coils are star-connected. A U-phase current, a V-phase current and a W-phase current are respectively supplied to each of the corresponding three phase coils to rotate a motor 5, which in turn outputs predetermined torque.

The motor control system according to the present embodiment is equipped with a semiconductor chip 1, and a calibration reference resistor Rref externally attached to the semiconductor chip 1. The calibration reference resistor Rref is of a high-precision resistor small in error.

The semiconductor chip 1 is equipped with control means 6, three drive circuits 20 - 1, 20 - 2 and 20 - 3, a dummy resistor Rd, and a voltage source Vacc. The drive circuits 20 - 1, 20 - 2 and 20 - 3 are respectively provided corresponding to the three phase coils of the motor 5. Each of the drive circuits 20 - 1, 20 - 2 and 20 - 3 are equipped with respective current detecting resistors Rs1, Rs2 and Rs3 for detecting currents flowing through the three phase coils of the motor 5. The dummy resistor Rd and the current detecting shunt resistors Rs1, Rs2 and Rs3 are of resistors formed inside the semiconductor chip 1 by the same process and consist of diffused resistors or resistors of polysilicon.

The drive circuits 20 - 1, 20 - 2 and 20 - 3 are similar in configuration to those described in Fig. 1.

The control means 6 is equipped with correcting means 10. Load currents Id1, Id2 and Id3 flowing through the current detecting resistors Rs1, Rs2 and Rs3 are detected as voltages respectively applied across the current detecting resistors Rs1, Rs2 and Rs3 and captured into the correcting means 10. The correcting means 10 corrects the voltages Vs1, Vs2 and Vs3 developed across the current detecting resistors Rs1, Rs2, and Rs3 by using the voltage Vd applied across the dummy resistor Rd and outputs the same to the control means 6 as post-correction voltages Vsn* (Vs1, Vs2 and Vs3). The contents to be corrected by the correcting means 10 are similar to those described in Fig. 2. The control means 6 performs feedback control in such a manner that the currents Id1, Id2 and Id3 flowing into the motor 5 used as a load are brought to their corresponding command current values set in advance based on the voltages Vsn* (Vs1, Vs2 and Vs3) output from the correcting means 10, thereby on/off-controlling switching elements lying inside the drive circuits 20 - 1, 20 - 2 and 20 - 3. Thus, the drive circuits 20 - 1, 20 - 2 and 20 - 3 output currents of predetermined values to the motor 5.

Consequently,high-precision and smooth motor control is enabled. Since the control circuit can be integrated into the same semiconductor chip 1 in a manner similar to the embodiment shown in Fig. 1, the control system can be brought into less size. Driving electric power steering, electric brake and the like by the motor 5 enables not only size reductions in the electric power steering and electric brake control system but also more delicate current control, thus making it possible to realize a more comfortable ride.

Incidentally, while the control means 6 including the correcting means 10 for the current detecting shunt resistor Rs is provided inside the semiconductor chip 1, it can also be provided outside the semiconductor chip 1 as shown in Fig. 10.

In the brushless motor 5, the sum of three-phase currents is zero. Accordingly, the current detecting shunt resistors need not be provided three, but may be provided two alone. Namely, when the current detecting shunt resistor Rs3 is not provided, the current Id3 can also be calculated as Id3 = 0 - Id1 - Id2.

According to the present embodiment as described above, the high-precision current detecting means can be built in a single-chip LSI and realized at a lower cost.

It is also possible to realize smoother motor control by the high-precision current control.

Since the control circuit can be integrated into the same semiconductor chip 1, the control system can be brought into less size.

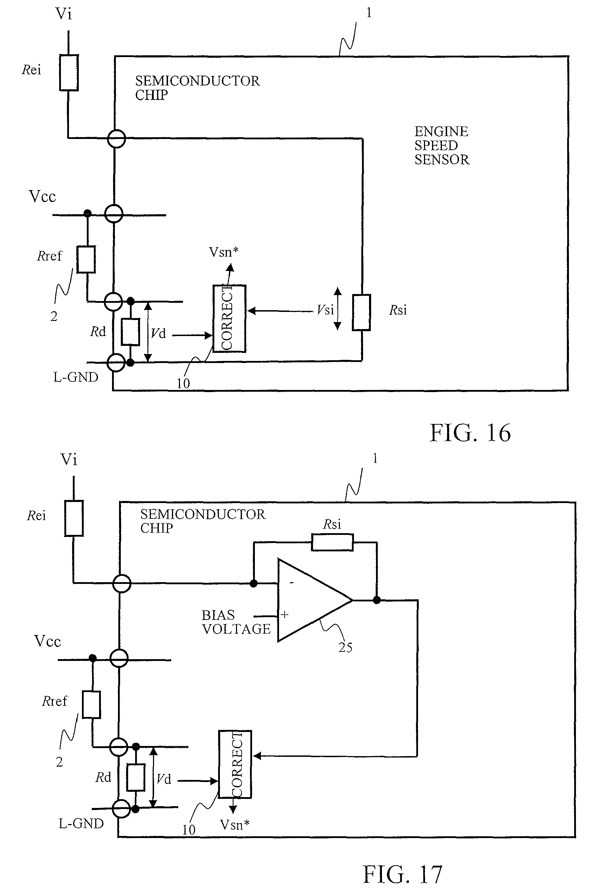

Next, a configuration and operation of a control system according to a fifth embodiment of the present invention will be explained using Fig. 16.

Fig. 16 is a block diagram showing the configuration of the control system according to the fifth embodiment of the present invention.

In the previous example, as shown in Figs. 9 and 10, the error between the resistance values of the shunt resistors (measuring resistors) Rs formed within the semiconductor chip is typified by the dummy resistor Rd, and the error is corrected based on it. Namely, the measuring resistors Rs are used as the shunt resistors. On the other hand, in the present embodiment, the current detecting, i.e., measuring resistor Rs is used as a voltage dividing resistor.

As shown in Fig. 16, a voltage Vi to be measured is divided by a resistor Rei lying outside the semiconductor chip 1 and a voltage measuring resistor Rsi lying inside the semiconductor chip 1 to thereby obtain a voltage Vsi applied across the Rsi.

When the measured voltage Vi exceeds the breakdown voltage of the semiconductor chip 1 or contains surges, the voltage divided by a divider in advance is often applied to its corresponding input terminal of the semiconductor chip 1. If, however, the cold-end side of the resistors configuring the voltage divider is realized by the voltage measuring resistor Rsi lying inside the semiconductor chip 1 as in the present example, external parts can be reduced according to the number of voltages Vi to be measured. As examples of the measured voltages Vi, there are mentioned a battery power supply voltage, a high-voltage power supply voltage, etc.

At this time, Vsi is placed in the following relationship:

$$Vsi = Vi \cdot Rsi/(Rsi + Rei) \qquad \ldots (12)$$

Assuming that an external high-precision resistor can be used for Rei, Vsi is affected by an error of Rsi.

Next, a configuration and operation of a control system according to a sixth embodiment of the present invention will be explained using Fig. 17.

Fig. 17 is a block diagram showing the configuration of the control system according to the sixth embodiment of the present invention.

As shown in Fig. 17, in the present embodiment, a voltage Vi to be measured is amplified by an amplifier 25 whose gain is determined by a resistor Rei lying outside a semiconductor chip 1 and a voltage measuring resistor Rsi lying inside the semiconductor chip 1.

When surges are contained in the measured voltage Vi, the voltage is often applied to its corresponding input terminal of the semiconductor chip 1 through the external resistor as in the present example. If, however, the feedback resistor of the resistors for determining the gain of the amplifier is realized by the measuring resistor Rsi lying inside the semiconductor chip 1 as in the present example, external parts can be reduced according to the number of voltages Vi to be measured.

At this time, the gain of the amplifier 25 is expressed as follows:

$$- Rei/Rsi \qquad\qquad \dots (13)$$

Assuming that an external high-precision resistor can be used for Rei, the gain thereof is affected by an error of Rsi.

While the single end input has been explained above, a differential input can also be carried out similarly. As examples of the voltage Vi to be measured, there are mentioned various signals externally inputted to a control unit. In addition to the possibility of surges being applied to these signals, there is also a possibility of a short circuit to a battery voltage. In both examples shown in Figs. 16 and 17, the dummy resistor Rd formed inside the same chip 1 as the measuring resistor Rsi in the same process is connected in series with the standard resistor Rref used as the calibration reference 2 lying outside the chip and divides the constant voltage Vcc. Information about an error in the dummy resistor Rd can be obtained by measuring a voltage Vd applied across the dummy resistor Rd. This error information makes it possible to correct an error in the measuring resistor Rsi, or an error in Vsi.

Incidentally, the correcting means 10 can also be provided outside the semiconductor chip 1 as descried in Fig. 10 in both examples shown in Figs. 14 and 15.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A control system comprising:

   control means (6) which outputs a control command for controlling a current allowed to flow through each load; and
   a plurality of drive circuits (20-1 to 20-4) each of which controls the current allowed to flow through the load, based on the control command outputted from the control means (6) and is provided within the same semiconductor chip (1),
   wherein the plurality of drive circuits include:

   current detecting shunt resistors (Rs1 to Rs4) each of which is provided in each of the drive circuits (20-1 to 20-4) and detects a current flowing through the load, the current detecting shunt resistors (Rs1 to Rs4) being provided within the semiconductor chip (1) by the same process;
   a dummy resistor (Rd) provided within the semiconductor chip (1) by the same process as the current detecting shunt resistors (Rs1 to Rs4);
   a calibration reference (Rref) externally attached to the semiconductor chip (1) and connected to the dummy resistor (Rd); and
   correcting means (10) which corrects a value of current flowing through each of the current detecting shunt resistors (Rs1 to Rs4), using the dummy resistor (Rd) and the calibration reference (Rref).

2. The control system according to claim 1,
   wherein the dummy resistor (Rd) comprises a plurality of resistive elements each having the same shape, which are connected in series in plural form.

3. The control system according to claim 1 or 2,
   wherein one or more current detecting shunt resistors (Rs1 to Rs4) comprises resistive elements connected in parallel in plural form.

4. The control system according to at least one of claims 1-3,
   wherein the calibration reference is of a calibration reference resistor (Rref) or a constant current source.

5. The control system according to at least one of claims 1-4,
   wherein each of the drive circuits (20-1 to 20-4) is equipped with an output drive semiconductor element and a current detection semiconductor element,

wherein control signal input terminals of the output drive semiconductor element and the current detection semiconductor element are connected to the control means (6),

wherein first current input/output terminals of the output drive semiconductor element and the current detection semiconductor element are connected in parallel, and

wherein a second current input/output terminal of the current detection semiconductor element is connected to a first terminal of the current detecting shunt resistor.

6. The control system according to claim 5,

wherein each of the drive circuits (20-1 to 20-4) is equipped with an operational amplifier circuit (24-1; 24-2; 24-3; 24-4),

wherein the second current input/output terminal of the current detection semiconductor element is connected to a negative-side input terminal of the operational amplifier circuit (24-1; 24-2; 24-3; 24-4),

wherein a second current input/output terminal of the output drive semiconductor element is connected to a positive-side input terminal of the operational amplifier circuit, and

wherein a second terminal of the current detecting shunt resistor (Rs1; Rs2; Rs3; Rs4) is connected to an output terminal of the operational amplifier circuit (24-1; 24-2; 24-3; 24-4).

7. The control system according to claim 6,

wherein the operational amplifier circuit (24-i) is equipped with a first operational amplifier (Am1) and a second operational amplifier (Am2),

wherein a first capacitor (Cp) is connected to a positive-side input terminal of the second operational amplifier (Am2), and a second capacitor (Cu) is connected to a negative-side input terminal thereof, and

wherein during a first operating phase, the first operational amplifier (Am1) amplifiers a potential relative to a reference potential, of the negative-side input terminal of the operational amplifier circuit and charges the same into the first capacitor (Cp),

during a second operating phase, the first operational amplifier (Am1) amplifies a potential of the positive-side input terminal and charges the same into the second capacitor (Cu), and

the first operating phase and the second operating phase are repeated alternately.

8. The control system according to claim 7,

wherein a gain of the first operational amplifier (Am1) is larger than that of the second operational amplifier (Am2).

9. The control system according to at least one of claims 5-8,

wherein the output drive semiconductor element is provided on the side of an upper arm and equipped with a second output semiconductor element provided on the side of a lower arm connected in series with the upper arm.

10. The control system according to at least one of claims 1-9,

wherein the correcting means (6) is equipped with: a coefficient calculator (11) for determining a coefficient K according to the value of Vd* corresponding to a result of conversion of a voltage Vd applied across the dummy resistor (Rd); and a multiplier (12) for multiplying a voltage applied across the current detecting shunt resistor (Rs1; Rs2; Rs3; Rs4) by the coefficient K determined by the coefficient calculator (11).

11. The control system according to at least one of claims 1-10,

wherein the correcting means (6) is equipped with an A/D converter (30) for converting the voltage applied across the current detecting shunt resistor to a digital signal and inputs the voltage applied across the dummy resistor (Rd) to a Vref input terminal of the A/D converter (30) as a reference voltage of the A/D converter (30).

12. The control system according to at least one of claims 1-11,

wherein the control means (6) is built in the semiconductor chip (1).

13. The control system according to at least one of claims 1-12,

wherein the control means (6) is provided outside the semiconductor chip (1).

14. A semiconductor device used in a control system having control means (6) which outputs a control command for controlling a current allowed to flow through each load, and a plurality of drive circuits (20-1 to 20-4) each of which controls the current allowed to flow through the load, based on the control command outputted from the control means (6), the plurality of drive circuits being provided within the same semiconductor chip (1),

wherein the semiconductor device includes:

the drive circuits (20-1 to 20-4);
current detecting shunt resistors (Rs1 to Rs4) each of which is provided in each of the drive circuits and detects a current flowing through the load, the current detecting shunt resistors being provided within the semiconductor chip (1) by the same process;
a dummy resistor (Rd) provided within the semiconductor chip by the same process as the current detecting shunt resistors;
connecting terminals which enable a connection of a calibration reference (Rref) externally attached to the semiconductor chip (1) and connected to the dummy resistor (Rd); and
correcting means (10) which corrects a value of current flowing through each of the current detecting shunt resistors, using the dummy resistor (Rd) and the calibration reference (Rref).

15. A semiconductor device comprising:

at least two resistors formed on the same semiconductor chip (1) in the same process,
wherein the first resistor corresponding to one thereof has means connected to the outside, and
wherein the second resistor corresponding to the other thereof is connected to a circuit lying within the same semiconductor chip (1).

16. The semiconductor device according to claim 15,
wherein means for measuring a value of the first resistor and means for correcting a value of the second resistor, based on the result of measurement by the measuring means are provided on the same semiconductor chip (1).

17. A control system using the semiconductor device according to claim 15,
wherein means for measuring the value of the first resistor and means for correcting the value of the second resistor, based on the result of measurement by the measuring means are provided on the same semiconductor chip.

18. The semiconductor device according to claim 15 or 16,
wherein the first resistor is connected to an external calibration reference through means connected to the outside.

19. The semiconductor device according to claim 18,
wherein the calibration reference is of a resistor (Rref), a constant voltage source or a constant current source.

20. The semiconductor device according to at least one of claims 15-19,
wherein the second resistor is of a current detecting shunt resistor, a voltage dividing resistor for dividing an input voltage, or a feedback resistor for determining the gain of an amplifier.

FIG. 1

FIG. 2

FIG. 3

FIG. 4

FIG. 5

FIG. 6

24-1

in_a

sw1

K1

Rf

Cn

OP-AMP

in_b

Ri

sw3

Ri

K2

out

sw2

Ri

sw4

Rb

Am1-1

Cp

Am2

Vbias

Am1

FIG. 7

| | Phase 1 | Phase 2 | Phase 1 | Phase 2 |
|---|---|---|---|---|
| sw1 | OPEN | CLS | OPEN | CLS |
| sw2 | CLS | OPEN | CLS | OPEN |
| sw3 | OPEN | CLS | OPEN | CLS |
| sw4 | CLS | OPEN | CLS | OPEN |

FIG. 8

FIG. 9

FIG. 10

FIG. 11

FIG. 12

FIG. 13

FIG. 14

FIG. 15

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003203805 A
- JP 2006165100 A